# EUROPEAN PATENT SPECIFICATION

(11) **EP 2 012 490 B1**
(45) Date of publication and mention of the grant of the patent: **24.02.2010**
(21) Application number: 07111983.8
(22) Date of filing: 06.07.2007
(51) Int. Cl.: H04L 29/06

(54) **Middleware for use in a client-server architecture**
Middleware zur Verwendung in einer Client-Server-Architektur
Dispositif intergiciel à utiliser dans une architecture client-serveur

(43) Date of publication of application: 07.01.2009
(73) Proprietor: NTT DoCoMo, Inc., Tokyo (JP)
(72) Inventor: Luther, Marko, 82256 Munich (DE); Boehm, Sebastian, 89671 Munich (DE); Weithoener, Timo, 89075 Ulm (DE); Liebig, Thorsten, 89075 Ulm (DE)
(74) Representative: Schöniger, Franz-Josef

(56) References cited:
- WO-A-00/05854
- US-A1- 2002 107 977
- US-A1- 2004 103 206
- US-B1- 7 010 609

## Description

### FIELD OF THE INVENTION

The present invention relates to a middleware for use in a client server architecture.

### BACKGROUND OF THE INVENTION

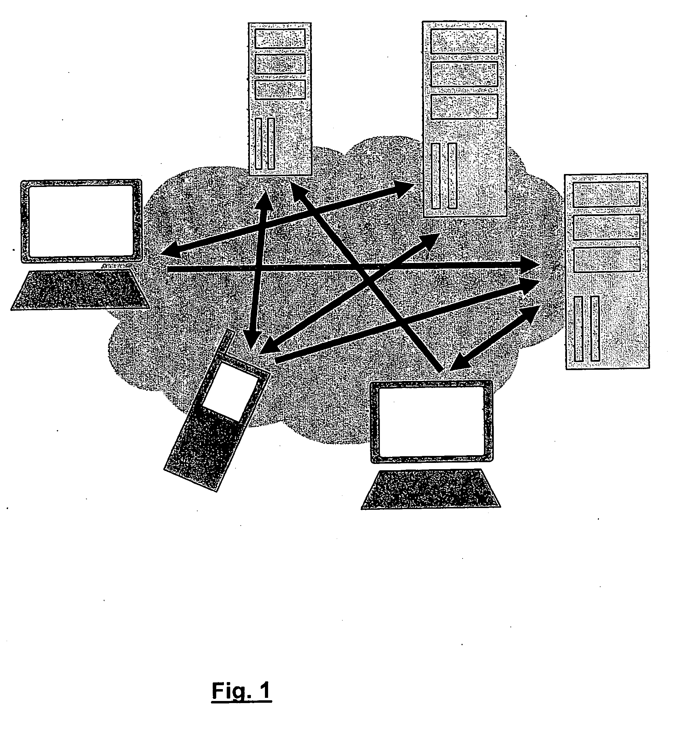

Distributed computer environments with client programs that request remote services from server computers are a common setting in data processing. Fig. 1 schematically illustrates such a distributed environment where multiple different clients such as PCs and mobile devices can connect to multiple servers to request different services. In Service Oriented Architectures (SOA), clients and servers usually communicate on the application layer via high-level communication protocols (OSI layer 7) over a computer network infrastructure using stateless request/reply patterns. Thereby, gradually increasing the functionality of the provided services, as new requirements arise, is common practice. Those extensions to the core functionality go hand in hand with modifications of the communication protocol. Incompatibilities between inter-connected applications occur when communication protocols change and parts of the computer infrastructure are replaced or updated. While some applications already implement the new protocol, others might still rely on the old version.

One such example is for instance, the DIG protocol which is a protocol, which is used in the field of knowledge representation and reasoning has just been updated from version 1.1. to a new, extended version named DIG 2.0 (see e.g. Turhan, A., Bechhofer, S., Kaplunova, A., Liebig, Th., Luther, M., Möller, R., Noppens, O., Patel-Schneider, P., Suntisrivaraporn, B., and Weithöner, T.: DIG2.0 - towards a flexible interface for Description Logic reasoners, In Proceedings of the OWL Experiences and Directions Workshop at the ISWC'06, November 2006). Updating a protocol like the DIG protocol results in a number of non-interoperable client and server components until each of these modules has seen an update to support the new interface specification.

In addition, in the concrete example of the DIG protocol a protocol fraction within DIG 2.0, which is not part of the predecessor version DIG 1.1 (e.g., the so-called told functionality), can also be useful for existing DIG 1.1 components during the transition phase between protocol versions. In order to allow clients to make use of those features only supported in DIG 2.0, the middleware architecture combines a DIG 1.1 component with a component providing the missing functionality (together with the actual protocol translation).

Having implemented a new software module that relies on a newly established protocol version, testing and verifying the overall functionality in a practical application is of supreme interest. The present invention provides a new method and apparatus providing a testing environment in such a scenario.

Document US 7,010,609 discloses a mechanism that allows arbitrary protocols to be added into a middleware based application.

### SUMMARY OF THE INVENTION

According to one embodiment there is provided a middleware for use in a client server architecture to forward requests from clients to corresponding servers and for delivering the responses of the servers to the corresponding clients, said middleware comprising:
a mapping module for maintaining a correspondence list indicating which server provides the functionality to respond to which type of client request;
a module for routing a client request to a corresponding server based on looking up said mapping module to identify the correct server, wherein
if for a certain client request said mapping module indicates that there are a plurality of servers are capable of responding to said client request, said client request is forwarded to at least two of said servers;
a comparator module for receiving and comparing the responses to the same client request from the different servers; and
an error processing module for performing an error processing in case there is a discrepancy between the responses from the different servers.

The mapping of the different servers, the distribution of the requests and the evaluation of the results allows to provide a test environment for a heterogeneous client-server architecture where there are different functionalities implemented with different protocols and an updated protocol covering also legacy funtionalities is to be checked for correctness. The testing can be done in-situ while avoiding the calamities usually arising if a new system is used which has not yet been tested sufficiently because the parallel running of the two systems provides a failsafe mechanism.

According to one embodiment said error processing comprises recording information about the responses where an error occurred.

This allows an analysis of the errors which have occurred and helps to improve the new system components.

According to one embodiment said servers comprise at least two types of servers which both offer at least in part the same functionalities through different protocols, one server type being a server using an old protocol version and the other server type being a server using a new protocol version, said middleware and said two server types being adapted to be used as a testing environment for said new protocol version by comparing through said comparator module the responses from said first and said second server type for those functionalities which are offered by both server types.

In this manner a complete testing environment can be provided.

According to one embodiment the middleware further comprises:
one or more client adapters for receiving requests from clients;
a transformation framework for transforming said client request into the internal representation of said middleware;
one or more server adapters for transforming the request from said internal representation of said middleware to the language understood by the server to which the request is to be delivered and for delivering the request to said server.

In this manner protocol mediation and compliance with different protocol versions can be achieved.

According to one embodiment the middleware further comprises:
an extension framework for enabling the extension of said middleware with new components, said extension framework being adapted such that if a new server adapter is loaded said mapping module is informed automatically about the new routes for the request types that can be processed via the newly loaded server adapter and any client adapters newly loaded start thereupon.

In this manner the system allows for easy extensibility by installing new components automatically.

According to one embodiment there is provided a forwarding method for use in a client server architecture to forward requests from clients to corresponding servers and for delivering the responses of the servers to the corresponding clients, said method comprising:
maintaining a correspondence list indicating which server provides the functionality to respond to which type of client request;
routing a client request to a corresponding server based on looking up correspondence list to identify the correct server, wherein
if for a certain client request said list indicates that there are a plurality of servers are capable of responding to said client request, said middleware forwards said client request to at least two of said servers;
receiving and comparing the responses to the same client request from the different servers; and
performing an error processing in case there is a discrepancy between the responses from the different servers.

According to one embodiment said error processing comprises recording information about the responses where an error occurred.

According to one embodiment said servers comprise at least two types of servers which both offer at least in part the same functionalities through different protocols, one server type being a server using an old protocol version and the other server type being a server using a new protocol version, said middleware and said two server types being adapted to be used as a testing environment for said new protocol version by comparing through said comparator module the responses from said first and said second server type for those functionalities which are offered by both server types.

According to one embodiment the method further comprises:
receiving requests from clients by one or more client adapters;
transforming said client request into the internal representation of said middleware;
transforming the request from said internal representation of said middleware to the language understood by the server to which the request is to be delivered and for delivering the request to said server by one or more server adapters.

According to one embodiment the method further comprises:
enabling the extension of said middleware with new components, said extension framework such that if a new server adapter is loaded said mapping module is informed automatically about the new routes for the request types that can be processed via the newly loaded server adapter and any client adapters newly loaded start thereupon.

According to one embodiment there is provided a computer program comprising computer program code which when being executed enables said computer to carry out a method according to one of the embodiments of the invention.

### DESCRIPTION OF THE DRAWINGS

Fig. 1 schematically illustrates a heterogeneous environment where an embodiment of the invention may be used.
Fig. 2 schematically illustrates a block diagram of a configuration of an embodiment of the invention.
Fig. 3 schematically illustrates a block diagram of a client adapter of an embodiment of the invention.
Fig. 4 schematically illustrates a block diagram of a transformation framework of an embodiment of the invention.
Fig. 5 schematically illustrates a block diagram of a configuration of a middleware core according to an embodiment of the invention.
Fig. 6 schematically illustrates a block diagram of a testing environment according to an embodiment of the invention.

### DETAILED DESCRIPTION

In the following embodiments of the invention will be described.

According to one embodiments of the invention there is provided a middleware architecture, which on the one hand mediates between different versions of communication protocols for software components and on the other hand supports cost-efficient automatic software testing. According to one embodiment such a middleware architecture performs a splitting and routing of request messages depending on the requested services.

An example of a scenario where the solution according to an embodiment of the invention can be applied is the development of the DIG Interface (see e.g. Bechhofer, S., Möller, R., Crowther. P.: The DIG Description Logic Interface. In: Calvanese, D. et al. Proc. of the Int. Workshop on Description Logics (DL'03). Rome, Italy, 2003). The DIG interface is an XML based protocol for the transmission and querying of Description Logic knowledge bases. In the following there will be made reference to particular properties of the DIG interface, but it is to be understood that this is only for exemplary purposes and any other protocol or interface may be used in connection with an embodiment of the invention as well.

According to one embodiment the communication problems caused by evolving protocols are solved by a generic middleware component, which is placed in between clients and servers. In addition to the aggregation of features such as routing, splitting, as well as transformation of different protocol versions, the architecture according to one embodiment can act as a testing environment. This is achieved by connecting multiple components for one and the same protocol or fraction thereof. Requests are passed to all registered components and the answers returned are compared and reviewed with respect to the reference implementation. Depending on the protocol semantics, the middleware architecture acts in various ways if differences in the answers returned are detected. To do so, the new systems runs in parallel to the legacy systems, thus enabling a continuous monitoring of the correctness of the generated responses. The updated infrastructure may contain next generation clients that are only able to deal with the new protocol version. In such a setting client requests are directed to the mediating middleware, which according to one embodiment provides the following capabilities:
- Mediation between different protocol versions.
- Request routing to the respective server components. Thereby the middleware is able to redirect requests to different systems if the requested service is supported.
- In case a different functionality is provided by one server component in one protocol version, while different server components are required in another protocol version, a splitting of requests and reassembling of responses is performed.
- The system monitors the responses from different systems. Differences in the results are detected and reported. In case of differing responses, according to one embodiment the final response sent back to the client is constructed from a prioritized system. For instance, in case there are more than two systems involved, a majority decision might be a feasible option.
- Easy extensibility to cope with custom extensions of a standard infrastructure.

The combination of the above features allows for the testing of new infrastructures during normal operation with the additional benefit that no artificial test cases need to be generated as the systems are tested in-situ with real, live data.

This makes it easy to adapt and test software components to updated communication protocols and allows software manufactures to extend a given protocol with own extensions, still using a given infrastructure for common parts of the protocol.

Such a solution is able to validate and integrate new components in parallel to its mediation functionality. The latter being a service useful for the seamless protocol upgrade of distributed application frameworks.

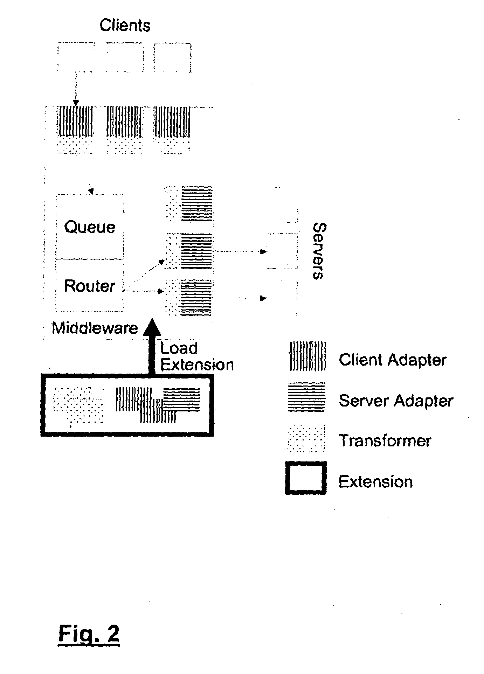

Now an embodiment of the invention will be described in somewhat more detail in connection with Fig. 2. It shows several clients which can connect to servers through a middleware component according to an embodiment of the invention.

The clients direct all request messages to the middleware, which is aware of the location of the requested services. The middleware receives the incoming request messages through the input queue and then with the routing component splits incoming request message(s) into individual requests, envelops these requests in individual request messages and redirects (routes) them to the matching server. Once the corresponding server processed the request, the middleware reassembles all responses and returns the combined response message to the appropriate client.

Furthermore, the middleware performs an automatic protocol translation to accommodate different protocol versions. To add new client or server adapters, together with the required routing information and transformers, the middleware is extendible by a plug-in mechanism (not shown) which can be used to install new components which are illustrated in Fig. 2 as "Load extension".

The Middleware architecture for adaptive protocol mediation and testing according to one embodiment includes the following parts:
- Client Adapters
- Transformation Framework
- Middleware Core and Test Methodology
- Server Adapters
- Extension Framework

The operation of these components will be described in the following.

If a client submits a request it first has to connect to the client adapter that supports the protocols the client speaks (e.g. DIG 1.1 serialized as XML via HTTP). The client adapter uses the transformation framework to transform the incoming message into the internal representation of the middleware core. Next, the translated message is handed over to the middleware core, where the request message is split into separate requests. These single requests are then queued up for processing. If a request is waiting in the queue, the routing component of the middleware core de-queues the request, looks up the routing information associated with it and passes it on to the respective server adapters. The server adapters are connected to the servers, which finally process the requests. Before the actual transmission of the requests, the server adapters possibly need to transform the requests into the appropriate target language by using the transformation framework. In the same way, response messages returned from the servers have to be transformed before they are handed over to the middleware core.

The middleware core collects all responses received and assembles the response message, which is handed over to the original client adapter. The client adapter then performs a final transformation process (if required) into the language of the respective client and eventually returns the complete response message.

Whenever multiple server adapters are registered for a certain request type, according to one embodiment a special handling of a request is performed. In such cases, the routing component of the middleware core sends the request to several, according to one embodiment to all those server adapters. Therefore it might happen that different servers are returning different responses (due to errors or differing implementations), whereby a according to one embodiment majority decision can control the final response. For example, if no response is returned by the absolute majority of the servers, an error message is included into the response message.

Such an implementation according to one embodiment can serve as a "test bed" for new protocol implementations by comparing the responses from servers which work according to the old protocol with the ones returned from servers operating with the new protocol. As long as no differences occur, the new (updated) protocol may be judged to operate correctly. However, if any discrepancies occur they may be recorded and evaluated to determine what is the reason for the discrepancies. In this manner errors in the new protocol may be determined in "real life" operation".

In the following some of the components of the system shown in Fig. 2 will be explained in somewhat more detail.

### Client Adapters

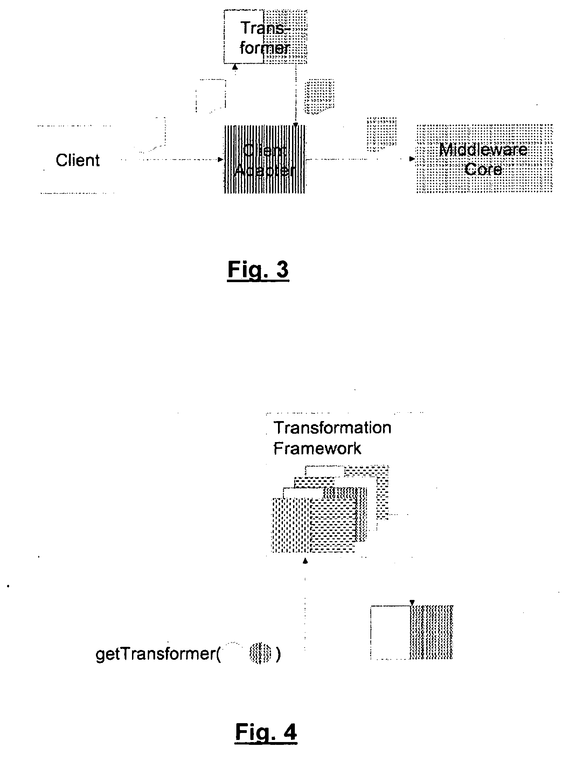

A client adapter is schematically illustrated in Fig. 3. The client adapters represents the inbound communication endpoints of the middleware and run in separate threads. Implementations of client adapters might be bound to a computer's TCP/IP port (e.g. port 80 for HTTP communication) and listen for incoming requests.

Whenever a request is received, the client adapter creates a new child thread that handles further processing steps. At first, this child thread has to translate the incoming message into the language spoken by the middleware core. Therefore it looks up the matching transformer (e.g. from DIG 1.1 as XML-Stream to DIG 2.0 as Document Object Model) in the transformation framework. While the middleware core defines the translation target, the client adapter either has to know the language of the incoming message by default or has to determine the language by analyzing the message. According to one embodiment both mechanisms are supported, however, it is preferable to provide separate client adapters for every protocol and language so that the appropriate transformer can be identified at start up. In this case the selection does not need to be repeated for every request message.

After retrieving the correct transformer, the message is passed on to the transformer for translation into the internal representation of the middleware core. Next, the translated message is passed on to the middleware core for processing. While the message is processed, the client thread suspends execution.

Upon completion of the response, it is notified to continue execution and to fetch the response message from the core. The message is then translated using a matching transformer from the transformation framework and is finally transmitted to the client.

### Transformation Framework

The transformation framework which is schematically illustrated in Fig. 4 can be described as a repository of transformers that can be accessed via an adequate functional interface. Each transformer is able to translate an input message of a certain language into an output message of another language. The transformation framework provides an interface to select a certain transformer from the list of all available transformers, based on the so-called transformer signature. The signature consists of two language identifiers: One for the source and one for the target language. According to one embodiment language identifiers can be arbitrarily chosen but should be unambiguous throughout the middleware.

### Middleware Core and Test Methodology

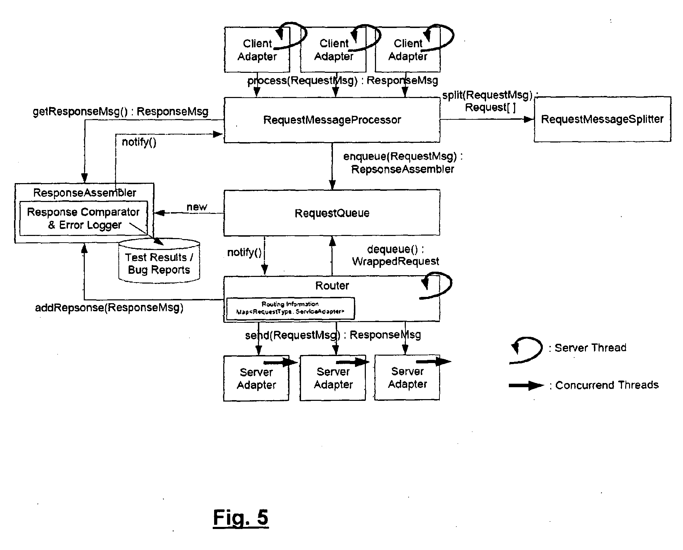

The middleware core according to one embodiment as illustrated in Fig. 5 contains the following components.
- Request message processor
- Request queue with request message splitter
- Router
- Response assembler

The operation of the middleware core will now be described referring to Fig. 5.

Whenever a request message is handed over from a client adapter the request message processor takes over the control of the further handling of the message. First the message is split into several individual requests (if applicable) using the request message splitter. Next, these individual requests are queued up in the request queue.

The request router is implemented as a separate thread, which initially goes to a sleep mode and is notified to resume operation by the request queue whenever new requests came in. The router de-queues all available requests one after the other and passes them on to the appropriate server adapters. Therefore, it verifies the request type using an internal list of types that are associated with certain server adapters, capable of processing the respective request.

If multiple server adapters are registered for a given request type, all requests of this type will be passed on to all those server adapters. In addition, if a request has to be sent to multiple server adapters, the router creates several child threads to process the requests in parallel.

The router hands over all responses to the response assembler, which has been informed about the actual number of responses to be managed by the RequestQueue as indicated by the "new" sent from the RequestQeue to the ResponseAssembler. Once all responses are processed, it constructs a response message out of the individual responses and makes it available to the respective client adapter (notifying the adapter to resume operation).

Here, the response evaluation comes into effect, capable of performing different strategies for evaluating differing response messages. This is carried out by the "response comparator" module which may further comprise an error logger. The error comparator compares the responses from the multiple servers as to whether they are identical or not. If there is a difference between the responses this may indicate e.g. that there is an error in an implementation of an updated version of a protocol. This conclusion may be drawn if there is a lower version of the protocol acting as a reference implementation and being known to be error free. If then a higher version of the same protocol implemented for a server to fulfill the same functionality delivers a different response this can be judged to be an indication of an error in the higher level protocol. At least it may be recorded (e.g. by the error logger) in order to check in detail later what was the reason for the discrepancy. For that purpose the data (e.g. the responses and the error messages, but also e.g. a log of successful responses) may be stored in a database indicated in Fig. 5 as "Test Results/Bug reports".

Regarding the delivery of the responses to the client, for instance, the final response could be chosen from the set of responses by counting equivalent responses and selecting the response with the highest count. If no response has the absolute majority (more than 50%) of the votes, an error message can be produced.

According to one embodiment, if the response message cannot be compiled within a given time interval (because some responses are still missing), the response assembler may complete the missing parts with the corresponding error messages.

### Server Adapters

The server adapters establish connections to services, which are responsible for the processing of a certain set of request types. Server adapters receive a request message, translate it into the language spoken by the server, transmit the message to the server and return the responses received from the server (after having translated them back to the original format). The DIG 1.1 HTTP Server Adapter represents a typical example of a server adapter which sends XML serialized DIG 1.1 messages via HTTP to a reasoner and hands back the reasoning results to the middleware core. For the purpose of translation the server adapter according to one embodiment refers to the transformation framework which has already been described before in connection with Fig. 4.

### Extension Framework

The extension framework allows to dynamically extend the functionality of the middleware. An extension consists of a program library, which contains an arbitrary number of transformers as well as client and server adapters. Each extension implements a specified interface (factory interface), which allows the middleware to load the named components from the library.

If a server adapter is loaded, the routing component of the middleware core is automatically informed about the new routes for the request types that can be processed via the newly loaded server adapter. All client adapters that were loaded from extensions are started thereupon (running as separate threads) and can thus be connected from clients for request processing. The transformers loaded from extensions immediately become available to all client and server adapters. The extension framework is schematically illustrated in Fig. 2 as "Load Extension".

### Testing Scenario

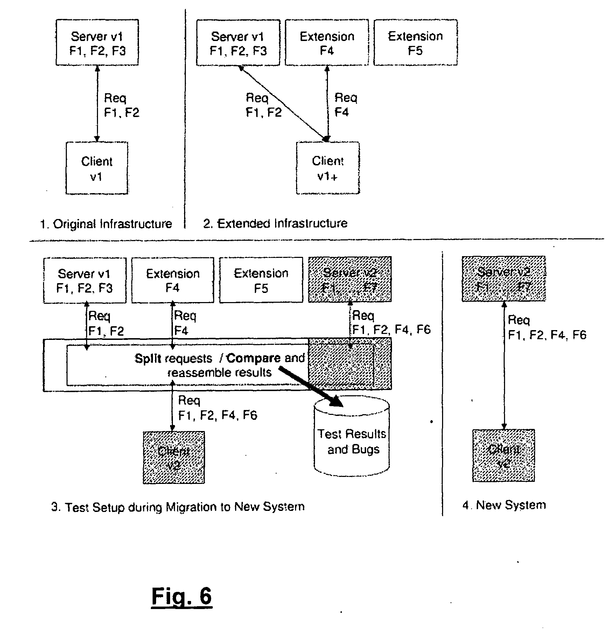

Now there will be described a scenario where an embodiment of the invention is used for testing purposes. Figure 6 exhibits four typical stages in a live cycle of a client server infrastructure. At first (1. in Fig. 6) a server offers a set of services (F1, F2, and F3) to a set of clients that request these services. Here, protocol version v1 is used for the communication. Over time, as new requirements arise (2. in Fig. 6), the functionality of the server is extended with extensions to provide new services (F4 and F5). To access these new services the client has to be updated with a slightly enriched communication protocol, capable of dealing with the new extensions (protocol version v1+).

After a certain time it becomes necessary to update the existing protocol to a new and enhanced major version (v2), which includes new functionalities (F6 and F7) and integrates also features that were previously only available as extensions (F4 and F5) (3. in Fig. 6).

To test the new infrastructure, a middleware component is introduced to route all requests with respect to functionality F1-F5 to the old infrastructure, which is running as reference system in addition to the new system. This means that a client request directed to functionality F1, F2 or F3 is directed to server v1 and additionally to server v2. Similarly, a request directed to functionality F4 is directed to the component Extension 4 and further to the server v2, and a request directed to functionality F5 is directed to extension F5 and to server v2.

This means that for a request directed to functionalities of the "old" or "legacy" systems F1 to F5, there will be two responses, one form the old system and one from the new one (server v2).

The middleware then performs some evaluation of the returned messages and according to one embodiment also draws some conclusion based on the evaluation. For performing the evaluation it compares the responses returned from the different systems (e.g. responses from functionalities F1 to F5 obtained from server v2 with the corresponding responses from the "old system") and decides if they are semantically equivalent. If so, this means that there is no discrepancy and therefore no "error", and accordingly the response from the new system is passed to the client. If not, however, there may be concluded that some error has occurred and an error processing may be performed.

According to one embodiment the error processing is such that the response from the reference system (which is formed by the "old system", e.g. F1 to F5) is translated to the new protocol (mediation from v1 to v2) and passed on. In such a case the middleware may create an error report that consists of the request, the expected response (as created by the reference system), and the erroneous response from the new system. The error report may be recorded in a database and may later be analyzed to identify the reason for the error.

In this manner a testbed for a new version of a protocol may be implemented.

The old versions are run in parallel and serve as a failsafe-mechanism which indicates when the new protocol may have produced an erroneous result due to the discrepancy between the responses. This has the advantage that the testing can actually performed during "normal operation" of the system without the risk of productivity errors because the redundant "legacy" system run in parallel notifies the system in case of a discrepancy, and the response from the "new system" in such case may be "handled with care" or be discarded.

Moreover, during the "real life" usage of the new system test data can be obtained which can then be analyzed later to identify the reasons for the errors. In this manner the testing helps to improve the new system.

According to one embodiment also other ways of "error processing" are possible. E.g. if there are different responses to the same request, there may be made a "count" of the different individual responses, and if one of them has a "absolute majority" or passes any other predefined criterion in terms of number count, this response may be chosen to be treated as the "correct one".

It will be understood that there may be implemented more than two servers for a certain functionality such as F1 to F7, and the evaluation of the responses may then make use of statistical analysis such as determining the "majority" or other indications of what may be the correct response.

The "testing environment" described may be used to evaluate the new system components as to whether they perform correctly.

After having successfully tested the new system components, the old modules can be shut down and the whole life cycle will start from the beginning (4. in Fig. 6).

As has been mentioned before already, one application scenario for embodiments of the present invention is the DIG protocol, albeit other application scenarios can be readily imagined by the skilled person.

In the following there will be described a sample application of the mediating middleware architecture. The *DIG Reference Middleware* (DIG RMW) mediates between different DIG languages - namely DIG 11 and DIG 2.0. DIG is a protocol, which is used in the field of knowledge representation and reasoning. DIG 1.1 is today's de-facto standard for the communication of ontology editors and systems offering reasoning services on ontologies (reasoners). The updated DIG 2.0 standard adds new functionality and adjusts the language to match the next version of the well-adopted Web Ontology Language (OWL) (see e.g. .Bechhofer, S., von Harmelen, F., Hendler, J., Horrocks, I., McGuiness, D., Patel-Schneider, P., Stein, L.: OWL Web Ontology Language Reference. W3C Recommendation, 2004).

An exemplary setting for the DIG RMW consists of new, experimental DIG 2.0 and old DIG 1.1 clients and a DIG 1.1 reasoner. The DIG 1.1 reasoner is supplemented by the DIG 2.0 Told Module that implements told axiom query capabilities that are not available in DIG 1.1, but standardized as a DIG 2.0 extension. In this setting, the DIG 2.0 client should be able to access standard reasoning services (offered by the DIG 1.1 reasoner) as well as the aforementioned told functionality, while the old DIG 1.1 client remains fully functional.

To accomplish this task, the DIG RMW loads two client adapters - one adapter for DIG 1.1 and another one for DIG 2.0. Both adapters are listening on different TCP ports for incoming HTTP requests, containing a DIG request message serialized as XML. Since DIG 2.0 is a superset of DIG 1.1, the DIG 2.0 language is used for the internal representation of the DIG RMW. Thus transformers from DIG 1.1 to DIG 2.0 and vice versa are required to communicate with DIG 1.1 clients and servers, and they may be implemented by the transformation framework or the server adapters mentioned in connection with the embodiments described before. DIG 2.0 clients and servers do not require any language transformation. However, in each case de-serialization and serialization from and to XML streams has to be conducted. Client and server adapters are responsible for the management of HTTP connections with DIG clients and servers.

Now assume that a DIG 2.0 client submits a request message which is consists of three requests: (1) the definition of a new axiom, (2) a call to a standard reasoning service and (3) a told request. This message will be split into three parts: The axiom definition is (1) transmitted to the DIG 1.1 server and the Told Module, since both respective server adapters are registered to manage this kind of request. The call to the standard reasoning service (2) is routed to the DIG 1.1 reasoner, while the told request (3) is forwarded to the Told Module. The service adapter that handles the communication with the DIG 1.1 reasoner has to perform a language transformation between the internal representation and DIG 1.1.

Once all responses were received from the server adapters, the final response message is built. In this respect, it needs to be ensured that the request, which was sent to both service adapters, returned the same response (a simple DIG confirmation in this case). Otherwise according to one embodiment an error message is included, instead of the original responses. Finally, the response message can be picked up by the client adapter, which transmits it to the DIG 2.0 client.

It should, however, be noted that the DIG protocol and its different versions are just one example of an environment where the present invention may be applied. In general any environment where there are different protocol versions and different functionalities of servers making use of different protocol versions embodiments of the invention may be applied.

It will be readily apparent to the skilled person that the methods, the elements, units and apparatuses described in connection with embodiments of the invention may be implemented in hardware, in software, or as a combination of both.

In particular it will be appreciated that the embodiments of the invention and the elements of modules described in connection therewith may be implemented by a computer program or computer programs running on a computer or being executed by a microprocessor.

## Claims

1. A middleware for use in a client server architecture to forward requests from clients to corresponding servers and for delivering the responses of the servers to the corresponding clients, said middleware comprising:
a mapping module for maintaining a correspondence list indicating which server provides the functionality to respond to which type of client request; **characterized by**
a module for routing a client request to a corresponding server based on looking up said mapping module to identify the correct server, wherein
if for a certain client request said mapping module indicates that there are a plurality of servers are capable of responding to said client request, said client request is forwarded to at least two of said servers;
a comparator module for receiving and comparing the responses to the same client request from the different servers; and
an error processing module for performing an error processing in case there is a discrepancy between the responses from the different servers.

2. The middleware of claim 1, wherein
said error processing comprises recording information about the responses where an error occurred.

3. The middleware of claim 1 or 2, wherein
said servers comprise at least two types of servers which both offer at least in part the same functionalities through different protocols, one server type being a server using an old protocol version and the other server type being a server using a new protocol version, said middleware and said two server types being adapted to be used as a testing environment for said new protocol version by comparing through said comparator module the responses from said first and said second server type for those functionalities which are offered by both server types.

4. The middleware of one of claims 1 to 3, further comprising:
one or more client adapters for receiving requests from clients;
a transformation framework for transforming said client request into the internal representation of said middleware;
one or more server adapters for transforming the request from said internal representation of said middleware to the language understood by the server to which the request is to be delivered and for delivering the request to said server.

5. The middleware of one of the preceding claims, further comprising:
an extension framework for enabling the extension of said middleware with new components, said extension framework being adapted such that if a new server adapter is loaded said mapping module is informed automatically about the new routes for the request types that can be processed via the newly loaded server adapter and any client adapters newly loaded start thereupon.

6. A forwarding method for use in a client server architecture to forward requests from clients to corresponding servers and for delivering the responses of the servers to the corresponding clients, said method comprising:
maintaining a correspondence list indicating which server provides the functionality to respond to which type of client request; **characterized by**
routing a client request to a corresponding server based on looking up correspondence list to identify the correct server, wherein
if for a certain client request said list indicates that there are a plurality of servers are capable of responding to said client request, said middleware forwards said client request to at least two of said servers;
receiving and comparing the responses to the same client request from the different servers; and
performing an error processing in case there is a discrepancy between the responses from the different servers.

7. The method of claim 6, wherein
said error processing comprises recording information about the responses where an error occurred.

8. The method of claim 6 or 7, wherein
said servers comprise at least two types of servers which both offer at least in part the same functionalities through different protocols, one server type being a server using an old protocol version and the other server type being a server using a new protocol version, said middleware and said two server types being adapted to be used as a testing environment for said new protocol version by comparing through said comparator module the responses from said first and said second server type for those functionalities which are offered by both server types.

9. The method of one of claims 6 to 8, further comprising:
receiving requests from clients by one or more client adapters;
transforming said client request into the internal representation of said middleware;
transforming the request from said internal representation of said middleware to the language understood by the server to which the request is to be delivered and for delivering the request to said server by one or more server adapters.

10. The method of one of claims 6 to 9, further comprising:
enabling the extension of said middleware with new components, said extension framework such that if a new server adapter is loaded said mapping module is informed automatically about the new routes for the request types that can be processed via the newly loaded server adapter and any client adapters newly loaded start thereupon.

11. A computer program comprising computer program code which when being executed enables said computer to carry out a method according to one of claims 6 to 10.

## Patentansprüche

1. Middleware zur Verwendung in einer Client-Server-Architektur, um Anforderungen von Clients an entsprechende Server weiterzuleiten und die Antworten der Server an die entsprechenden Clients zu liefern, wobei die Middleware umfaßt:
ein Mapping-Modul zum Führen einer Korrespondenzliste, die angibt, welcher Server die Funktionalität vorsieht, auf welchen Typ von Client-Anforderung zu antworten; **gekennzeichnet durch**
ein Modul zum Weiterleiten einer Client-Anforderung an einen entsprechenden Server, basierend auf dem Nachschlagen im Mapping-Modul, um den korrekten Server zu identifizieren, wobei,
wenn das Mapping-Modul für eine bestimmte Clientanforderung angibt, dass es eine Vielzahl von Servern gibt, die in der Lage sind, auf die Clientanforderung zu antworten, die Clientanforderung an zumindest zwei der Server weitergeleitet wird;
ein Vergleichsmodul zum Empfangen und Vergleichen der Antworten von den unterschiedlichen Servern auf dieselbe Clientanforderung; und
ein Fehlerverarbeitungsmodul zum Durchführen einer Fehlerverarbeitung, falls zwischen den Antworten von den unterschiedlichen Servern eine Diskrepanz besteht.

2. Middleware nach Anspruch 1, wobei
die Fehlerverarbeitung das Aufzeichnen von Informationen über die Antworten umfaßt, bei denen ein Fehler auftrat.

3. Middleware nach Anspruch 1 oder 2, wobei
die Server zumindest zwei Typen von Servern umfassen, die beide zumindest teilweise dieselben Funktionalitäten über unterschiedliche Protokolle anbieten, wobei ein Servertyp ein Server ist, der eine alte Protokollversion verwendet, und der andere Servertyp ein Server ist, der eine neue Protokollversion verwendet, wobei die Middleware und die zwei Servertypen dazu ausgelegt sind, als Testumgebung für die neue Protokollversion verwendet zu werden, indem durch das Vergleichsmodul die Antworten vom ersten und vom zweiten Servertyp für diejenigen Funktionalitäten verglichen werden, die von beiden Servertypen angeboten werden.

4. Middleware nach einem der Ansprüche 1 bis 3, ferner umfassend:
einen oder mehrere Client-Adapter zum Empfangen von Anforderungen von Clients;
ein Umwandlungs-System zum Umwandeln der Clientanforderung in die interne Darstellung der Middleware;
einen oder mehrere Server-Adapter zum Umwandeln der Anforderung von der internen Darstellung der Middleware in die Sprache, die von dem Server verstanden wird, an den die Anforderung geliefert werden soll, und zum Liefern der Anforderung an den Server.

5. Middleware nach einem der vorhergehenden Ansprüche, ferner umfassend:
ein Erweiterungs-System, um die Erweiterung der Middleware mit neuen Komponenten zu ermöglichen, wobei das Erweiterungs-System derart ausgelegt ist, dass, wenn ein neuer Server-Adapter geladen wird, das Mapping-Modul automatisch über die neuen Routen für die Anforderungstypen informiert wird, die über den neu geladenen Server-Adapter verarbeitet werden können, und alle neu geladenen Client-Adapter daraufhin starten.

6. Weiterleitungsverfahren zur Verwendung in einer Client-Server-Architektur, um Anforderungen von Clients an entsprechende Server weiterzuleiten, und um die Antworten der Server an die entsprechenden Clients zu liefern, wobei das Verfahren umfaßt:
Führen einer Korrespondenzliste, die angibt, welcher Server die Funktionalität vorsieht, auf welchen Typ von Client-Anforderung zu antworten; **gekennzeichnet durch**
Weiterleiten einer Client-Anforderung an einen entsprechenden Server, basierend auf dem Nachschlagen in einer Korrespondenzliste, um den korrekten Server zu identifizieren, wobei,
wenn die Liste für eine bestimmte Clientanforderung angibt, dass es eine Vielzahl von Servern gibt, die in der Lage sind, auf die Clientanforderung zu antworten, die Middleware die Clientanforderung an zumindest zwei der Server weiterleitet;
Empfangen und Vergleichen der Antworten von den unterschiedlichen Servern auf dieselbe Clientanforderung; und
Durchführen einer Fehlerverarbeitung, falls zwischen den Antworten von den unterschiedlichen Servern eine Diskrepanz besteht.

7. Verfahren nach Anspruch 6, wobei
die Fehlerverarbeitung das Aufzeichnen von Informationen über die Antworten umfaßt, bei denen ein Fehler auftrat.

8. Verfahren nach Anspruch 6 oder 7, wobei
die Server zumindest zwei Typen von Servern umfassen, die beide zumindest teilweise dieselben Funktionalitäten über unterschiedliche Protokolle anbieten, wobei ein Servertyp ein Server ist, der eine alte Protokollversion verwendet, und der andere Servertyp ein Server ist, der eine neue Protokollversion verwendet, wobei die Middleware und die zwei Servertypen dazu ausgelegt sind, als Testumgebung für die neue Protokollversion verwendet zu werden, indem durch das Vergleichsmodul die Antworten vom ersten und vom zweiten Servertyp für diejenigen Funktionalitäten verglichen werden, die von beiden Servertypen angeboten werden.

9. Verfahren nach einem der Ansprüche 6 bis 8, ferner umfassend:
Empfangen von Anforderungen von Clients durch einen oder mehrere Client-Adapter;
Umwandeln der Clientanforderung in die interne Darstellung der Middleware;
Umwandeln der Anforderung von der internen Darstellung der Middleware in die Sprache, die von dem Server verstanden wird, an den die Anforderung geliefert werden soll, und zum Liefern der Anforderung an den Server durch einen oder mehrere Server-Adapter.

10. Verfahren nach einem der Ansprüche 6 bis 9, ferner umfassend:
Ermöglichen der Erweiterung der Middleware mit neuen Komponenten, wobei das Erweiterungs-System so ausgelegt ist, dass, wenn ein neuer Server-Adapter geladen wird, das Mapping-Modul automatisch über die neuen Routen für die Anforderungstypen informiert wird, die über den neu geladenen Server-Adapter verarbeitet werden können, und alle neu geladenen Client-Adapter daraufhin starten.

11. Computerprogramm, umfassend Computerprogrammcode, der es bei Ausführung einem Computer ermöglicht, ein Verfahren gemäß einem der Ansprüche 6 bis 10 auszuführen.

## Revendications

1. Intergiciel pour l'utilisation dans une architecture client-serveur pour transférer des requêtes de clients à des serveurs correspondants et pour remettre les réponses des serveurs aux clients correspondants, ledit logiciel médiateur comprenant :
un module de mappage pour maintenir une liste de correspondance indiquant quel serveur fournit la fonctionnalité de répondre à quel type de requête de client ; **caractérisé par**
un module pour acheminer une requête de client jusqu'à un serveur correspondant sur la base de la consultation dudit module de mappage pour identifier le serveur correct, dans lequel
si pour une certaine requête de client, ledit module de mappage indique qu'il y a une pluralité de serveurs qui sont capables de répondre à ladite requête de client, ladite requête de client est transférée à au moins deux desdits serveurs ;
un module comparateur pour recevoir et comparer les réponses à la même requête de client en provenance des différents serveurs ; et
un module de traitement d'erreur pour effectuer un traitement d'erreur dans le cas où il y a une divergence entre les réponses provenant des différents serveurs.

2. Intergiciel selon la revendication 1, dans lequel
ledit traitement d'erreur comprend l'enregistrement d'informations concernant les réponses où une erreur s'est produite.

3. Intergiciel selon la revendication 1 ou 2, dans lequel
lesdits serveurs comprennent au moins deux types de serveurs qui offrent tous deux au moins en partie les mêmes fonctionnalités par l'intermédiaire de protocoles différents, un type de serveur étant un serveur utilisant une ancienne version de protocole et l'autre type de serveur étant un serveur utilisant une nouvelle version de protocole, ledit logiciel médiateur et lesdits deux types de serveurs étant adaptés pour être utilisés comme un environnement de test pour ladite nouvelle version de protocole en comparant par l'intermédiaire dudit module comparateur les réponses en provenance dudit premier et dudit second type de serveur pour ces fonctionnalités qui sont offertes par les deux types de serveurs.

4. Intergiciel selon l'une des revendications 1 à 3, comprenant en outre :
un ou plusieurs adaptateurs clients pour recevoir des requêtes en provenance de clients ;
un cadre de transformation pour transformer ladite requête de client en la représentation interne dudit logiciel médiateur ;
un ou plusieurs adaptateurs serveurs pour transformer la requête de ladite représentation interne dudit logiciel médiateur en langage compris par le serveur auquel la requête doit être remise et pour remettre la requête audit serveur.

5. Intergiciel selon l'une des revendications précédentes, comprenant en outre :
un cadre d'extension pour permettre l'extension dudit logiciel médiateur avec de nouveaux composants, ledit cadre d'extension étant adapté de sorte que si un nouvel adaptateur serveur est chargé, ledit module de mappage est informé automatiquement des nouveaux chemins pour les types de requêtes qui peuvent être traités par l'adaptateur serveur nouvellement chargé et tout adaptateur client nouvellement chargé démarre alors.

6. Procédé de transfert pour l'utilisation dans une architecture client-serveur pour transférer des requêtes de clients à des serveurs correspondants et pour remettre les réponses des serveurs aux clients correspondants, ledit procédé comprenant :
maintenir une liste de correspondance indiquant quel serveur fournit la fonctionnalité de répondre à quel type de requête de client **caractérisé par**
acheminer une requête de client jusqu'à un serveur correspondant sur la base de la consultation de la liste de correspondance pour identifier le serveur correct, dans lequel si pour une certaine requête de client, ladite liste indique qu'il y a une pluralité de serveurs qui sont capables de répondre à ladite requête de client, ledit logiciel médiateur transfère ladite requête de client à au moins deux desdits serveurs ;
recevoir et comparer des réponses à la même requête de client en provenance des différents serveurs ; et
exécuter un traitement d'erreur dans le cas où il y a une divergence entre les réponses provenant des différents serveurs.

7. Procédé selon la revendication 6, dans lequel
ledit traitement d'erreur comprend l'enregistrement d'informations concernant les réponses où une erreur s'est produite.

8. Procédé selon la revendication 6 ou 7, dans lequel
lesdits serveurs comprennent au moins deux types de serveurs qui offrent tous deux au moins en partie les mêmes fonctionnalités par l'intermédiaire de protocoles différents, un type de serveur étant un serveur utilisant une ancienne version de protocole et l'autre type de serveur étant un serveur utilisant une nouvelle version de protocole, ledit logiciel médiateur et lesdits deux types de serveurs étant adaptés pour être utilisés comme un environnement de test pour ladite nouvelle version de protocole en comparant par l'intermédiaire dudit module comparateur les réponses en provenance dudit premier et dudit second type de serveur pour ces fonctionnalités qui sont offertes par les deux types de serveurs.

9. Procédé selon l'une des revendications 6 à 8, comprenant en outre ;
recevoir des requêtes en provenance de clients par un ou plusieurs adaptateurs clients ;
transformer ladite requête de client en la représentation interne dudit logiciel médiateur ;
transformer la requête de ladite représentation interne dudit logiciel médiateur en langage compris par le serveur auquel la requête doit être remise et pour remettre la requête audit serveur par un ou plusieurs adaptateurs serveurs.

10. Procédé selon l'une des revendications 6 à 9, comprenant en outre ;
permettre l'extension dudit intergiciel avec de nouveaux composants, ledit cadre d'extension étant tel que si un nouvel adaptateur serveur est chargé, ledit module de mappage est informé automatiquement des nouveaux chemins pour les types de requêtes qui peuvent être traités par l'adaptateur serveur nouvellement chargé et tout adaptateur client nouvellement chargé démarre alors.

11. Programme informatique comprenant un code de programme informatique qui lorsqu'il est exécuté permet audit ordinateur d'effectuer un procédé selon l'une des revendications 6 à 10.
